# FASCICULE DE BREVET EUROPEEN

(11) **EP 1 393 336 B1**
(45) Date de publication et mention de la délivrance du brevet: **23.08.2006**
(21) Numéro de dépôt: 02748939.2
(22) Date de dépôt: 06.06.2002
(51) Int. Cl.: H01H 25/06

(54) **DISPOSITIF DE COMMANDE POUR VEHICULE AUTOMOBILE DESTINE NOTAMMENT A PILOTER UN ORDINATEUR DE BORD**
STEUEREINRICHTUNG FÜR EIN KRAFTFAHRZEUG INSBESONDERE ZUR STEUERUNG EINES ONBOARD-COMPUTERS
CONTROL DEVICE FOR MOTOR VEHICLE IN PARTICULAR FOR CONTROLLING AN ON-BOARD COMPUTER

(30) Priorité: 07.06.2001 FR 0107468
(43) Date de publication de la demande: 03.03.2004
(73) Titulaire: Valeo Switches and Detection Systems - VSDS, 94000 Créteil (FR)
(72) Inventeur: MANGE, Jean-Christophe, F-94410 St Maurice (FR); CHIATTELLI, Claudio, F-93150 Le Blanc Mesnil (FR)
(74) Mandataire: de la Bigne, Guillaume Michel Marie
(86) Numéro de dépôt international: PCT/FR2002/001932
(87) Numéro de publication internationale: WO 2002/099825

(56) Documents cités:
- EP-A- 0 282 817
- EP-A- 0 389 366
- EP-A- 1 017 077
- US-A- 4 394 546

## Description

La présente invention concerne un dispositif de commande pour véhicule automobile destiné notamment à piloter un ordinateur de bord.

On connaît déjà dans l'état de la technique par exemple dans le document EP-A-0 282 817, un dispositif de commande, du type comprenant :
- un support muni d'une extrémité proximale portant un premier bouton de commande et d'une extrémité distale portant des moyens formant contacteur électrique,
- le support portant en outre au moins une première bague de commande montée rotative autour d'un axe géométrique dit longitudinal et au moins une première tringle de commande, déplaçable longitudinalement à travers la première bague de commande, comportant une extrémité proximale reliée au premier bouton de commande et une extrémité distale d'actionnement des moyens formant contacteur électrique.

Les bague et bouton de commande forment des moyens de commutation électrique susceptibles de piloter des organes électriques variés. Selon des applications classiques du dispositif de commande précité, la bague rotative pilote un moteur ou des moyens de séquencement d'un essuie-glace du véhicule alors que le bouton commande un avertisseur.

L'invention a pour but d'augmenter les moyens de commutation électrique portés par un dispositif de commande du type précité afin notamment de pouvoir utiliser ce dispositif pour piloter un ordinateur de bord à multiples menus, ceci sans nuire à l'ergonomie du dispositif de commande.

A cet effet, l'invention a pour objet un dispositif de commande pour véhicule automobile, du type précité, **caractérisé en ce que** le support porte une seconde tringle de commande, déplaçable longitudinalement à travers la première bague de commande, comportant une extrémité proximale reliée à un second bouton de commande, porté par l'extrémité proximale du support, et une extrémité distale d'actionnement des moyens formant contacteur électrique, les première et seconde tringles de commande comprenant des moyens de guidage longitudinal mutuel.

Suivant d'autres caractéristiques de ce dispositif :
- les moyens de guidage longitudinal comprennent des faces complémentaires de guidage mutuel munie chacune d'un décrochement formant languette de guidage longitudinal ;
- les faces complémentaires de guidage mutuel sont munies de bossages délimitant des surfaces de contact mutuel réduit ;
- les première et seconde tringles de commande présentent chacune une section transversale circulaire interrompue par les faces complémentaires de guidage mutuel ;
- les moyens formant contacteur électrique comprennent des première et deuxième languettes souples conductrices déformables élastiquement chacune entre une position d'ouverture d'un circuit électrique respectif et une position de fermeture de ce circuit électrique respectif vers laquelle elles sont sollicitées chacune par une tringle de commande correspondante ;
- l'extrémité distale des première et seconde tringles de commande porte un téton de coopération avec la languette souple conductrice correspondante ;
- l'extrémité distale du support est articulée sur une embase ;
- la première bague de commande est montée rotative sur l'extrémité proximale du support et porte les premier et second boutons de commande, les première et seconde tringles de commande formant un ensemble, de forme générale cylindrique, sensiblement coaxial à l'axe longitudinal ;
- le support porte une seconde bague de commande, montée rotative autour de l'axe longitudinal, intercalée axialement entre la première bague de commande et l'extrémité distale du support ;
- les deux boutons de commande sont destinés à piloter un ordinateur de bord du véhicule.

L'invention sera mieux comprise à la lecture de la description qui va suivre, donnée uniquement à titre d'exemple et faite en se référant aux dessins dans lesquels :
- la figure 1 est une vue en perspective d'un dispositif de commande pour véhicule automobile, selon un premier mode de réalisation de l'invention ;
- la figure 2 est une vue en coupe longitudinale du dispositif de commande représenté sur la figure 1 ;
- la figure 3 est une vue en coupe suivant la ligne 3-3 de la figure 2 ;
- la figure 4 est une vue en perspective montrant certains organes du dispositif de commande représenté sur la figure 1 ;
- la figure 5 est une vue similaire à la figure 2 d'un dispositif de commande selon un second mode de réalisation de l'invention.

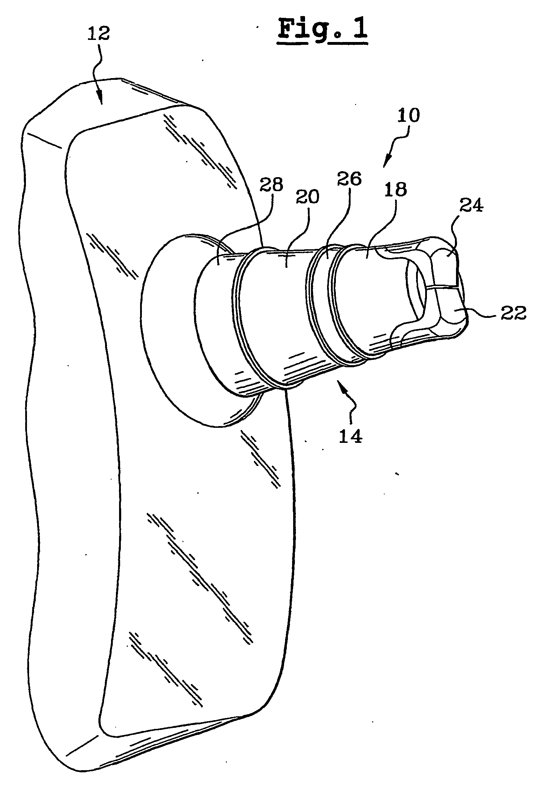

On a représenté sur les figures 1 à 4 un dispositif de commande 10 pour véhicule automobile selon un premier mode de réalisation de l'invention. Ce dispositif 10 est destiné par exemple à piloter, d'une part, un moteur et/ou des moyens de séquencement d'essuie-glace et, d'autre part, un ordinateur de bord du véhicule.

Le dispositif de commande 10 comprend une embase 12 sur laquelle est articulée une manette 14. L'embase 12 est agencée dans l'habitacle du véhicule, de préférence à proximité du volant de direction afin qu'un conducteur du véhicule puisse accéder facilement à la manette 14.

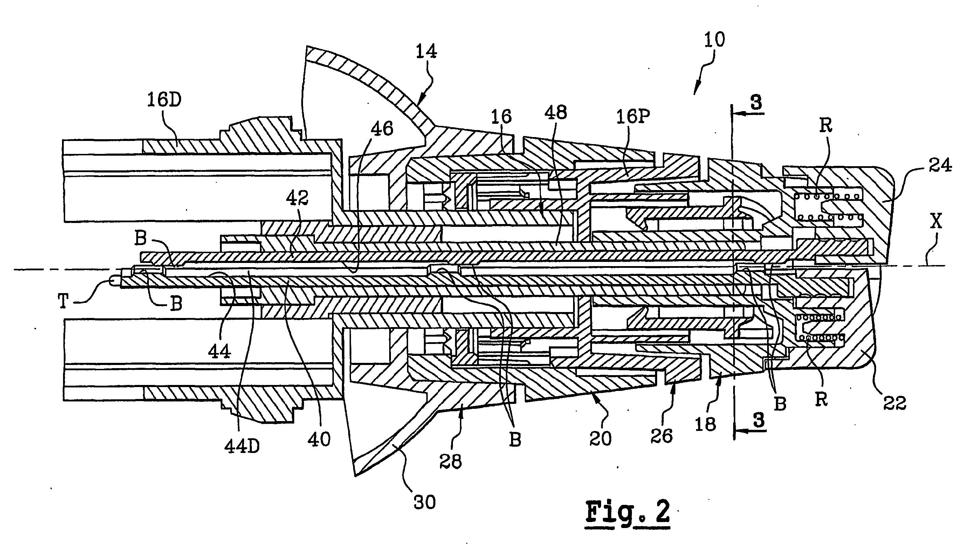

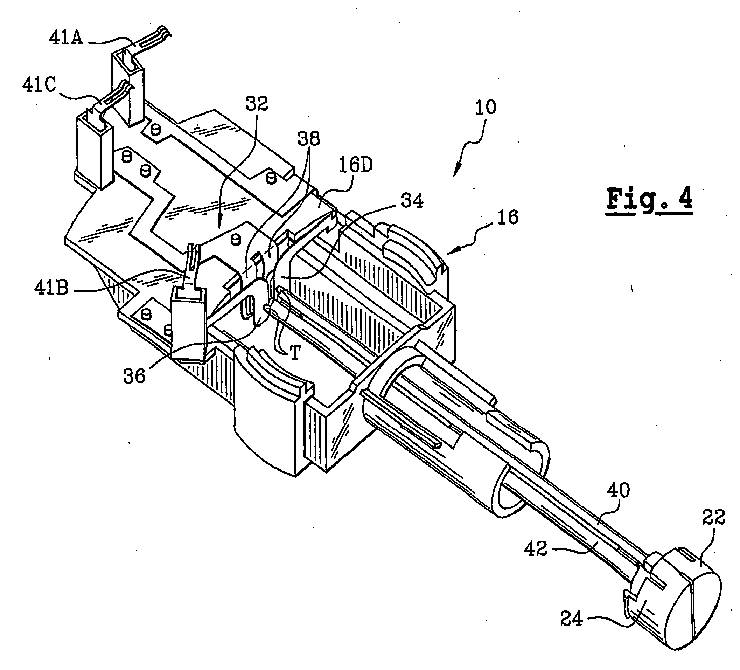

En se référant plus particulièrement aux figures 2 et 4, on voit que la manette 14 comprend un support 16, de forme générale allongée, comportant deux parties emmanchées l'une dans l'autre. La première partie, représentée sur les figures 2 et 4, délimite une extrémité distale 16D du support 16. La seconde partie, représentée sur la figure 2, délimite une extrémité proximale 16P du support 16.

Le support 16 porte une première bague de commande 18 montée rotative de façon connue en soi sur l'extrémité proximale 16P de ce support, autour d'un axe géométrique appelé par la suite axe longitudinal X. Le support 16 porte également une seconde bague de commande 20 montée rotative de façon connue en soi autour de l'axe longitudinal X. Cette seconde bague de commande 20 est intercalée axialement entre la première bague 18 et l'extrémité distale 16D du support.

Les bagues de commande 18,20 forment des moyens de commutation électrique destinés, par exemple, à piloter un moteur et/ou des moyens de séquencement d'essuie-glace du véhicule.

La première bague de commande 18 porte des premier 22 et second 24 boutons de commande formant des moyens de commutation électrique destinés, par exemple, à piloter le défilement de menus d'un ordinateur de bord du véhicule. Le premier bouton de commande 22 est destiné par exemple à faire défiler les menus dans un premier sens alors que le second bouton de commande 24 est destiné à faire défiler ces menus dans un second sens, opposé au précédent.

Les première 18 et seconde 20 bagues de commande sont séparées axialement l'une de l'autre par une première bague fixe 26 solidaire du support 16. Une seconde bague fixe 28, solidaire du support 16, porte une jupe 30 en forme générale de calotte sphérique. Cette seconde bague fixe 28 est intercalée axialement entre la seconde bague de commande 20 et l'extrémité distale 16D du support.

L'extrémité distale 16D du support est articulée sur l'embase 12, représentée sur la figure 1, à l'aide de moyens classiques formant rotule. Ainsi, ta manette 14 est susceptible, par exemple, de pivoter de haut en bas et d'avant en arrière en considérant la figure 1.

En se référant à la figure 4, on voit que l'extrémité distale 16D du support porte des moyens 32 formant contacteur électrique. Ces moyens 32 comprennent, de préférence, des première 34 et deuxième 36 languettes souples conductrices, déformables élastiquement, destinées à être mises à des potentiels de polarités opposées. Les moyens 32 comprennent également une languette conductrice double 38 contre laquelle les première 34 et deuxième 36 languettes déformables sont destinées à être mises en contact pour fermer des premier et second circuits électriques, respectivement.

Les languettes conductrices 34 à 38 sont reliées à un circuit de commande classique, porté par l'embase 12, au moyen de pistes conductrices munies de contacts frottants 41A, 41 B, 41C. Ces derniers permettent le maintien de la connexion électrique entre les moyens 32 formant contacteur et le circuit de commande porté par l'embase 12, indépendamment des mouvements du support 16 par rapport à cette embase 12.

Le support 16 porte des première et seconde tringles de commande 40, 42, déplaçables longitudinalement à travers les bagues 18, 20. Chaque tringle de commande 40, 42 comporte une extrémité proximale reliée à un bouton de commande respectif 22, 24 et une extrémité distale d'actionnement des moyens 32 formant contacteur électrique, destinée à coopérer avec une languette souple 34, 36 correspondante.

Chaque bouton de commande 22,24 est déplaçable en translation, conjointement avec la tringle 40,42 à laquelle il est relié, sensiblement parallèlement à l'axe X, entre une position de repos, vers laquelle il est rappelé élastiquement par un ressort R (voir bouton 24 illustré sur la figure 2), et une position active (voir bouton 22 illustré sur la figure 2) dans laquelle la tringle 40, 42 appuie sur la languette souple 34, 36 correspondante pour la mettre en contact avec la double languette 38.

Ainsi, chaque languette souple 34, 36 est déplaçable entre une position d'ouverture d'un circuit électrique correspondant (position de repos) et une position de fermeture de ce circuit électrique (position active) vers laquelle elle est sollicitée par la tringle de commande 40, 42 correspondante.

Dans le premier mode de réalisation de l'invention, les ressorts R sont de type hélicoïdal.

On notera que, afin d'optimiser le contact entre les tringles de commande 40, 42 et les languettes souples conductrices 40, 42, l'extrémité distale de ces tringles 40, 42 porte un téton T de coopération avec la languette souple conductrice 40, 42 correspondante.

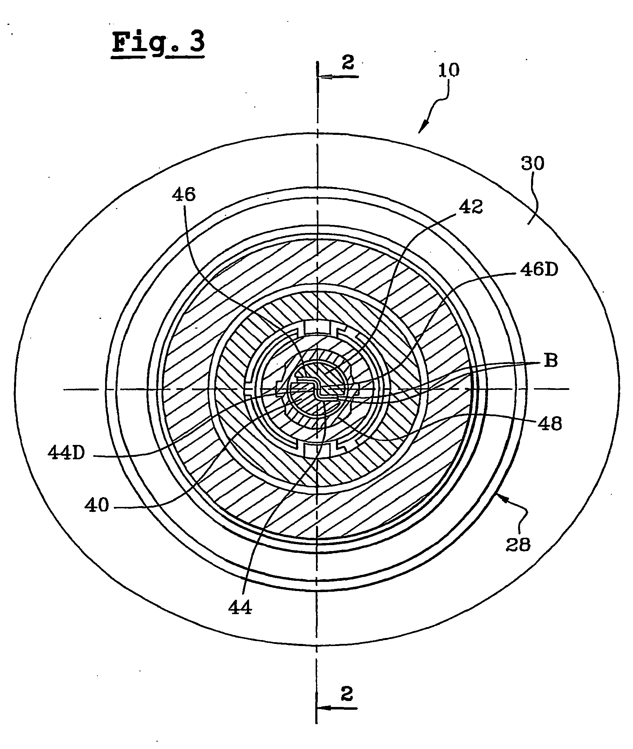

En se référant notamment aux figures 2 et 3, on voit que les tringles de commande 40, 42 comprennent des moyens de guidage longitudinal mutuel. Dans l'exemple décrit, ces moyens de guidage longitudinal comprennent des faces complémentaires 44, 46 de guidage mutuel munies chacune d'un décrochement 44D, 46D délimitant un gradin formant languette de guidage longitudinal. Afin de limiter les frottements entre les faces de guidage mutuel 44, 46, ces dernières sont munies de bossages B, épousant leur forme générale en gradin, délimitant des surfaces de contact mutuel réduit. Dans l'exemple décrit, les tringles 40,42 comportent trois paires de bossages B en contact mutuel, ces paires étant réparties axialement le long des tringles 41,42.

On notera que les tringles de commande 40, 42 présentent chacune une section transversale circulaire interrompue par les faces complémentaires de guidage mutuel 44, 46. Ainsi, les tringles de commande 44, 46 forment un ensemble, de forme générale cylindrique, sensiblement coaxial à l'axe longitudinal X, susceptible de tourner autour de cet axe X conjointement avec la première bague de commande 18 et les boutons 22, 24.

Le débattement angulaire de la première bague de commande 18 est, dans l'exemple décrit, limité à environ 60°. Le positionnement relatif des extrémités distales des tringles de commande 40, 42 et des languettes souples 34, 36 est adapté pour ne pas empêcher la coopération des tringles 41, 42 avec les languettes 34, 36 lors des débattements angulaires du premier bouton de commande 18.

L'ensemble comprenant les deux tringles de commande 40 ,44 est logé dans un organe tubulaire 48, porté par le support 16, formant palier de guidage. Cet organe tubulaire 48 participe également au guidage longitudinal de chaque tringle de commande 40,44.

Le fonctionnement de la manette 14 du dispositif de commande selon l'invention est très simple. En particulier, l'utilisateur actionne les bagues de commande 18,20 en les faisant tourner autour de l'axe X de façon à piloter le moteur et/ou les moyens de séquencement d'essuie-glace. Pour piloter le défilement de menus de l'ordinateur de bord, l'utilisateur actionne, selon le sens de défilement souhaité, l'un ou l'autre des boutons de commande 22,24 en l'enfonçant longitudinalement à l'encontre de la force de rappel du ressort R. Ceci a pour effet d'actionner les moyens 32 formant contacteur par l'intermédiaire de la tringle 40, 42 reliée au bouton de commande 22,24 manoeuvré par l'utilisateur.

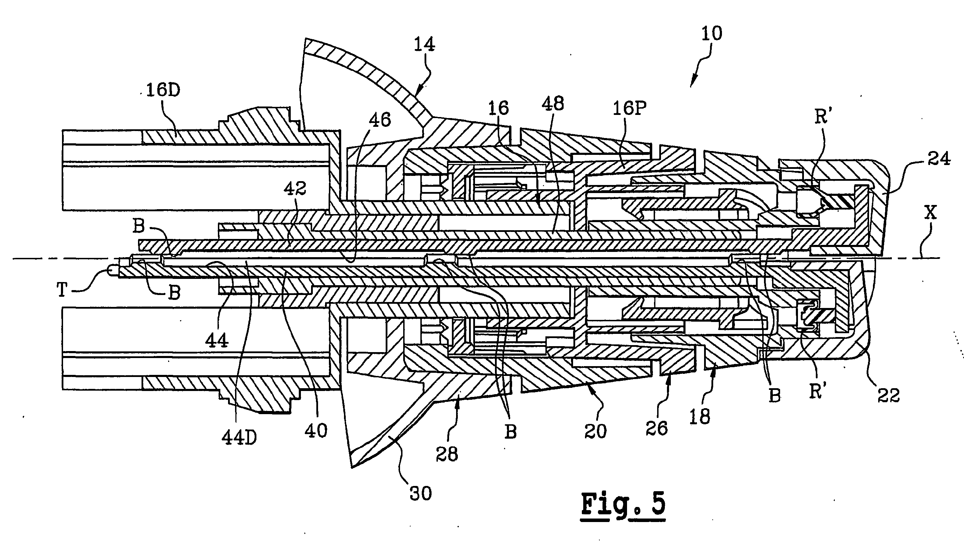

Dans le second mode de réalisation de l'invention illustré sur la figure 5, les boutons de commande 22, 24 sont rappelés élastiquement vers leur position de repos par des ressorts R' du type à cloque déformable.

Plus particulièrement, les ressorts R' illustrés sur la figure 5 ont une forme générale de cloque et sont fabriqués en silicone.

Le déplacement d'un bouton 22, 24 depuis sa position de repos vers sa position active provoque la déformation du ressort de rappel R' correspondant par franchissement d'un point dur. L'utilisateur actionnant un bouton 22, 24 perçoit ce point dur qui traduit ainsi par un effet tactile l'actionnement des moyens 32 formant contacteur.

En variante, les ressorts R' peuvent être constitués par des lames à effet de cloque déformable, ces dernières étant plus économiques que les ressorts hélicoïdaux R et les ressorts-cloques R' en silicone.

Parmi les avantages de l'invention, on notera que celle-ci permet d'augmenter les moyens de commutation électrique portés par le dispositif de commande afin notamment de pouvoir utiliser ce dispositif pour piloter un ordinateur de bord à multiples menus, ceci en utilisant des moyens 32 formant contacteur électrique agencés dans l'extrémité distale du support 16 de la manette, c'est-à-dire déportés longitudinalement vers l'embase 12 par rapport aux bagues 18, 20 et boutons 22, 24 de commande.

## Revendications

1. Dispositif de commande, du type comprenant :
- un support (16) muni d'une extrémité proximale (16P) portant des premier (22) et second (24) boutons de commande et d'une extrémité distale (16D) portant des moyens (32) formant contacteur électrique,
- le support (16) portant en outre au moins une première bague de commande (18) montée rotative autour d'un axe géométrique dit longitudinal (X) et au moins des première (40) et seconde (42) tringles de commande, déplaçables longitudinalement à travers la première bague de commande (18), les première (40) et seconde (42) tringles de commande comportant chacune une extrémité proximale reliée respectivement aux premier (22) et second (24) boutons de commande et une extrémité distale d'actionnement des moyens (32) formant contacteur électrique, les première (40) et seconde (42) tringles de commande comprenant des moyens (44, 46, B) de guidage longitudinal mutuel,
**caractérisé en ce que** l'extrémité distale (16D) du support (16) est articulée sur une embase (12) agencée dans un véhicule automobile.

2. Dispositif selon la revendication 1, **caractérisé en ce que** les moyens de guidage longitudinal comprennent des faces complémentaires de guidage mutuel (44, 46) munie chacune d'un décrochement (44D, 46D) formant languette de guidage longitudinal.

3. Dispositif selon la revendication 2, **caractérisé en ce que** les faces complémentaires de guidage mutuel (44, 46) sont munies de bossages (B) délimitant des surfaces de contact mutuel réduit.

4. Dispositif selon la revendication 2 ou 3, **caractérisé en ce que** les première (40) et seconde (42) tringles de commande présentent chacune une section transversale circulaire interrompue par les faces complémentaires (44, 46) de guidage mutuel.

5. Dispositif selon l'une quelconque des revendications précédentes, **caractérisé en ce que** les moyens (32) formant contacteur électrique comprennent des première (34) et deuxième (36) languettes souples conductrices déformables élastiquement chacune entre une position d'ouverture d'un circuit électrique respectif et une position de fermeture de ce circuit électrique respectif vers laquelle elles sont sollicitées chacune par une tringle de commande (40, 42) correspondante.

6. Dispositif selon la revendication 5, **caractérisé en ce que** l'extrémité distale des première (40) et seconde (42) tringles de commande porte un téton (T) de coopération avec la languette souple conductrice correspondante (34, 36).

7. Dispositif selon l'une quelconque des revendications précédentes, **caractérisé en ce que** la première bague de commande (18) est montée rotative sur l'extrémité proximale (16P) du support (16) et porte les premier (22) et second (24) boutons de commande, les première (40) et seconde (42) tringles de commande formant un ensemble, de forme générale cylindrique, sensiblement coaxial à l'axe longitudinal (X).

8. Dispositif selon la revendication 7, **caractérisé en ce que** le support (16) porte une seconde bague de commande (20), montée rotative autour de l'axe longitudinal (X), intercalée axialement entre la première bague de commande (18) et l'extrémité distale (16D) du support (16).

9. Dispositif selon l'une quelconque des revendications précédentes, **caractérisé en ce que** les deux boutons de commande (22, 24) sont destinés à piloter un ordinateur de bord du véhicule.

## Claims

1. A control device of the type comprising:
- a support (16) provided with a proximal end (16P) carrying first (22) and second (24) control buttons, and a distal end (16D) carrying means (32) forming an electrical contactor;
- the support (16) further carrying at least a first control ring (18) mounted to turn about a geometrical axis called longitudinal axis (X), and at least first (40) and second (42) control rods that are longitudinally displaceable through the first control ring (18), each of the first (40) and second (42) control rods having a proximal end connected respectively to the first (22) and second (24) control buttons and a distal end for actuating the electrical contactor means (32), the first (40) and second (42) control rods including mutual longitudinal guide means (44, 46, B);
**characterized in that** the distal end (16D) of the support (16) is articulated on a baseplate (12) arranged in a motor vehicle.

2. A device according to claim 1, **characterized in that** the longitudinal guide means comprise complementary mutual guide faces (44, 46) each provided with an offset (44D, 46D) forming a longitudinal guide strip.

3. A device according to claim 2, **characterized in that** the complementary mutual guide faces (44, 46) are provided with projections (B) defining mutual contact areas that are small.

4. A device according to claim 2 or 3, **characterized in that** each of the first (40) and second (42) control rods presents a cross-section that is circular and interrupted by the complementary mutual guide faces (44, 46).

5. A device according to any preceding claim, **characterized in that** the electrical contactor means (32) comprise first (34) and second (36) flexible conductive tongues each of which is elastically deformable between a position in which it opens a corresponding electrical circuit and a position in which it closes this corresponding electrical circuit, with each of the blades being urged towards the closed-circuit position by a corresponding one of the control rods (40, 42).

6. A device according to claim 5, **characterized in that** the distal end of each of the first (40) and second (42) rods carries a stud (T) for co-operating with the corresponding flexible conductive tongue (34, 36).

7. A device according to any preceding claim, **characterized in that** the first control ring (18) is mounted to turn on the proximal end (16P) of the support (16) and carries the first (22) and second (24) control buttons, the first (22) and second (24) control rods forming an assembly of generally cylindrical shape that is substantially coaxial about the longitudinal axis (X).

8. A device according to claim 7, **characterized in that** the support (16) carries a second control ring (20) mounted to turn about the longitudinal axis (X), being interposed axially between the first control ring (18) and the distal end (16D) of the support (16).

9. A device according to any preceding claim, **characterized in that** the two control buttons (22, 24) are intended to control a computer on board the vehicle

## Patentansprüche

1. Steuervorrichtung, umfassend:
- einen Träger (16), der mit einem proximalen Ende (16P), welches einen ersten (22) und einen zweiten (24) Steuerknopf trägt, und einem distalen Ende (16D), welches Mittel (32), die einen elektrischen Schalter bilden, trägt, versehen ist,
- wobei der Träger (16) ferner mindestens einen ersten um eine Längsachse (X) genannte geometrische Achse drehbar gelagerten Steuerring (18) und mindestens eine erste (40) und eine zweite (42) Steuerstange, die durch den ersten Steuerring (18) in Längsrichtung beweglich sind, trägt, und die erste (40) und die zweite (42) Steuerstange jeweils ein proximales Ende, das jeweils mit dem ersten (22) und dem zweiten (24) Steuerknopf verbunden ist, und ein distales Ende zur Betätigung der Mittel (32), die einen elektrischen Schalter bilden, aufweisen, wobei die erste (40) und die zweite (42) Steuerstange Mittel (44, 46, B) zum gegenseitigen Führen in Längsrichtung umfassen,
**dadurch gekennzeichnet, dass** das distale Ende (16D) des Trägers (16) an einem in einem Kraftfahrzeug angebrachten Sockel (12) mit Gelenken versehen ist.

2. Vorrichtung nach Anspruch 1, **dadurch gekennzeichnet, dass** die Mittel zum Führen in Längsrichtung komplementäre Seiten zum gegenseitigen Führen (44, 46), die jeweils mit einem Rücksprung (44D, 46D), der eine Zunge zum Führen in Längsrichtung bildet, versehen sind, aufweisen.

3. Vorrichtung nach Anspruch 2, **dadurch gekennzeichnet, dass** die komplementären Seiten zum gegenseitigen Führen (44, 46) mit Nocken (B) versehen sind, welche reduzierte gegenseitige Kontaktflächen begrenzen.

4. Vorrichtung nach Anspruch 2 oder 3, **dadurch gekennzeichnet, dass** die erste (40) und die zweite (42) Steuerstange jeweils einen durch die komplementären Flächen (44, 46) zum gegenseitigen Führen unterbrochenen runden Querschnitt aufweisen.

5. Vorrichtung nach einem der vorhergehenden Ansprüche, **dadurch gekennzeichnet, dass** die Mittel (32), die einen elektrischen Schalter bilden, eine erste (34) und eine zweite (36) flexible leitende Zunge, die jeweils elastisch verformbar ist zwischen einer geöffneten Stellung eines entsprechenden elektrischen Kreislaufs und einer geschlossenen Stellung dieses elektrischen Kreislaufs, nach der sie jeweils durch eine entsprechende Steuerstange (40, 42) beansprucht werden, umfassen.

6. Vorrichtung nach Anspruch 5, **dadurch gekennzeichnet, dass** das distale Ende der ersten (40) und der zweiten (42) Steuerstange einen Zapfen (T) zum Zusammenwirken mit der entsprechenden flexiblen leitenden Zunge (34, 36) trägt.

7. Vorrichtung nach einem der vorhergehenden Ansprüche, **dadurch gekennzeichnet, dass** der erste Steuerring (18) drehbar am proximalen Ende (16P) des Trägers (16) montiert ist und den ersten (22) und den zweiten (24) Steuerknopf trägt, wobei die erste (40) und die zweite (42) Steuerstange eine Baugruppe mit allgemein zylindrischer Form bilden, die weitestgehend koaxial zur Längsachse (X) ist.

8. Vorrichtung nach Anspruch 7, **dadurch gekennzeichnet, dass** der Träger (16) einen zweiten Steuerring (20) trägt, der drehbar um die Längsachse (X) montiert und axial zwischen dem ersten Steuerring (18) und dem distalen Ende (16D) des Trägers (16) eingesetzt ist.

9. Vorrichtung nach einem der vorhergehenden Ansprüche, **dadurch gekennzeichnet, dass** die beiden Steuerknöpfe (22, 24) dazu bestimmt sind, einen Bordcomputer des Fahrzeugs zu steuern.
